# EUROPEAN PATENT SPECIFICATION

(11) **EP 1 212 902 B1**
(45) Date of publication and mention of the grant of the patent: **05.01.2011**
(21) Application number: 00960942.1
(22) Date of filing: 18.09.2000
(51) Int. Cl.: H04W 88/18

(54) **A SHORT MESSAGE GATEWAY**
NETZWERKÜBERGANGSSYSTEM FÜR KURZNACHRICHTEN
PASSERELLE DE MESSAGES COURTS

(30) Priority: 17.09.1999 IE 990776
(43) Date of publication of application: 12.06.2002
(73) Proprietor: Markport Limited, Dublin 2 (IE)
(72) Inventor: CORRIGAN, Louis, Enfield County Meath (IE); AITKEN, David James, Dublin 1 (IE); MCGRATH, Martin, Mohill County Leitrim (IE)
(74) Representative: Weldon, Michael James
(86) International application number: PCT/IE2000/000107
(87) International publication number: WO 2001/022752

(56) References cited:
- WO-A-00/42790
- DE-A- 19 602 449

## Description

### INTRODUCTION

### Field of the Invention

The invention relates to transfer of short messages between non-compatible networks such as PDC and IMT-2000 networks. In this specification these two network types are used as examples to describe signal transfers.

### Prior Art Discussion

At present, communication of short messages between non-compatible networks is complex and error-prone.

The invention is therefore directed towards providing a gateway to improve such communication to the extent of achieving transparency.

### Objectives

Short message transparency between PDC and IMT-2000 networks in this specification means the ability for short message service centres, served by their home technology to send short messages to handsets served by a foreign technology, and for handsets in a foreign technology to send short messages to their home short message service centres served by their home technology. Thus, in the PDC/IMT-2000 context, the invention is directed towards achieving short message subscriber transparency as follows.
- IMT-2000 subscribers, while in the IMT-2000 network, will be able to send short messages to:
   a) PDC subscribers in a PDC network
   b) IMT-2000 subscribers in an IMT-2000 network
   c) IMT-2000 subscribers roaming onto a PDC network
   d) Any other subscriber in any other IMT-2000 or GSM network with whom the IMT-2000 operator has appropriate inter-working agreements
- IMT-2000 subscribers, while in the IMT-2000 network, will be able to receive short messages from:
   a) PDC subscribers in a PDC network
   b) IMT-2000 subscribers in an IMT-2000 network
   c) IMT-2000 subscribers roaming onto a PDC network
   d) Any other subscriber in any other IMT-2000 or GSM network with whom the IMT-2000 operator has appropriate inter-working agreements
- IMT-2000 subscribers, while roaming onto a PDC network, will be able to send short messages to:
   a) PDC subscribers in a PDC network
   b) IMT-2000 subscribers in an IMT-2000 network
   c) IMT-2000 subscribers roaming onto a PDC network
   d) Any other subscriber in any other IMT-2000 or GSM network with whom the IMT-2000 operator has appropriate inter-working agreements
- IMT-2000 subscribers, while roaming onto the PDC network, will be able to receive short messages from:
   a) PDC subscribers in a PDC network
   b) IMT-2000 subscribers in an IMT-2000 network
   c) IMT-2000 subscribers roaming onto a PDC network a) Any other subscriber in any other IMT2000 or GSM network with whom the IMT-2000 operator has appropriate inter-working agreements.

A subscriber's home Short Message Service Centre (SMSC) is the SMSC that handles that subscriber's mobile originated short messages. Specifically, an IMT-2000 subscriber's home SMSC is in the IMT-2000 network even when roaming onto the PDC network. A PDC subscriber's home SMSC is in the PDC network.

DE19602449 (and corresponding US6163546) describe transmission of short messages between a GSM network and a DECT network.

WO00/42790 describes provision of voice mail messages to mobile subscribers..

In this specification, "'VMSC" means visitor mobile switching centre, "SMSC" means short message service centre, and "MSRN" means Mobile Station Roaming Number.

### SUMMARY OF THE INVENTION

### Statements of Invention

According to the invention, there is provided a short message gateway as set out in claims 1 to 17 in various embodiments.

### DETAILED DESCRIPTION OF THE INVENTION

### Brief Description of the Drawings

The invention will be more clearly understood from the following description of some embodiments thereof given by way of example only with reference to the accompanying drawings in which:-
Figs. 1 to 4 are overview diagrams illustrating a short message gateway system of the invention; and
Figs. 5 to 14 are signal transfer diagrams illustrating short message inter-working scenarios.

### Description of the Embodiments

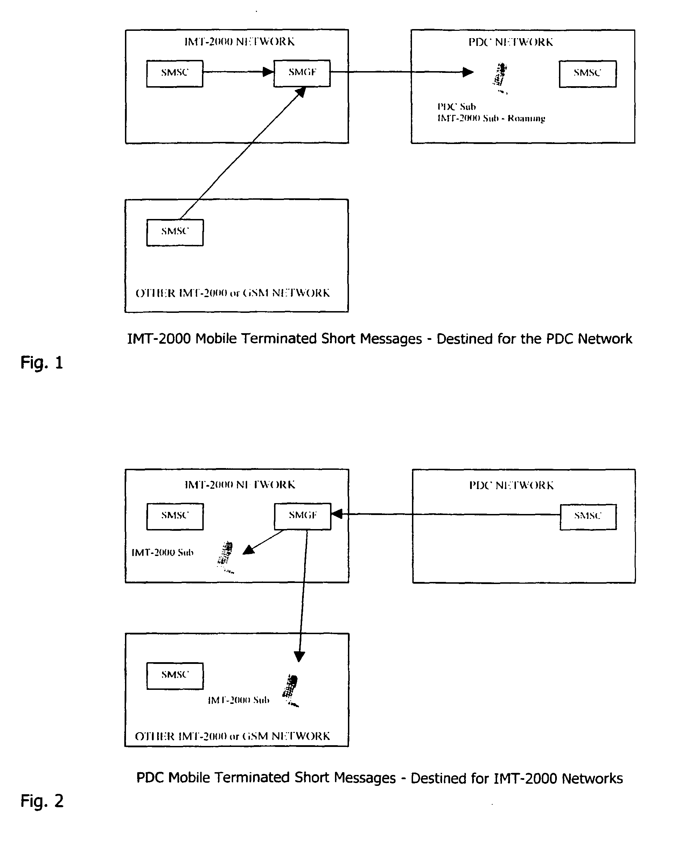

The invention provides a short message gateway comprising a gateway function (SMGF) and components of other network elements. The SMGF is a gateway function through which all short messages between the networks are routed. The SMGF is responsible for mediating between the different protocols and elements of procedure and for conveting short messages to the appropriate format and onward routing to the destination network. This is shown in Figs. 1 and 2.

The SMGF resides as a separate entity in the IMT-2000 network, which has roaming agreements with the PDC networks. The SMGF places no infrastructure requirements on the PDC networks.

PDC SMSC short messages, destined for an IMT-2000 network and IMT-2000 SMSC short messages, destined for a PDC network, are all routed to the SMGF. The SMGF performs routing enquiries to determine the location of the destination handset. Once the destination network of the handset has been determined the SMGF then carries out the appropriate conversion between the PDC short message and the IMT-2000 short message format and forwards the short message towards the serving VMSC.

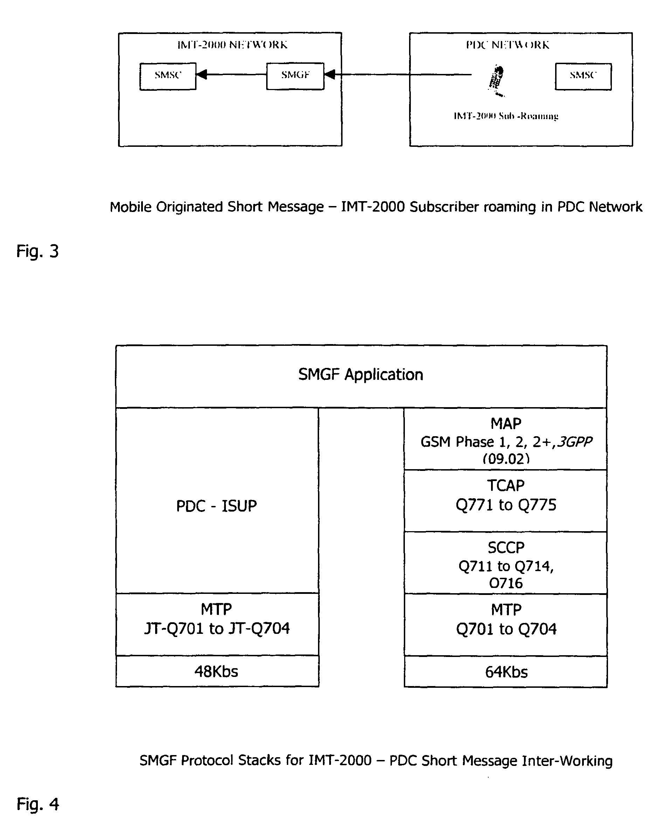

Mobile originated short messages from IMT-2000 subscribers roaming onto the PDC network are delivered to and managed from the home IMT-2000 SMSC in the IMT-2000 network. This is depicted in Fig. 3.

Referring to Fig. 4, the SMGF comprises an SMG application over a PDC stack comprising PDC-ISUP, and MTP layers and an IMT-2000 stack comprising MAP, TCAP, SCCP, and MTP layers.

The SMGF is programmed to determine by what type of network a subscriber is being served (i.e. IMT-2000 or PDC) and to route short messages accordingly. It supports the interface protocols to allow it to inter-work with specific network entities in both the IMT-2000 network and the PDC networks. It interfaces to the PDC network over PDC ISUP and to the IMT-2000 network over GSM MAP. In addition the SMGF supports functionality to perform short message format conversion between IMT-2000 and PDC.

Depending on the scenario, the SMGF appears as either a serving VMSC, or a home SMSC. In all scenarios its function is to mediate between the different protocols and elements of procedure and to relay the message onwards and to translate the results. It does not store the messages and, therefore, there is no database of messages.

An important feature of the SMGF architecture is that it allows subscribers from "other IMT-2000 networks" for example those outside of Japan, to send short messages to PDC subscribers. Similarly, PDC subscribers could also send short messages to IMT-2000 subscribers of other IMT-2000 networks. These other IMT-2000 networks would not require a SMGF node, instead all short messages could be routed to the IMT-2000 network, which has the SMGF node and routed onwards from there.

A fundamental principle of short messaging is that all short messages are handled by a short message service centre (SMSC). There are two basic scenarios as follows:
**MO** Mobile Originated. In these scenarios a subscriber uses his/her mobile to generate a short message and sends it to his/her home SMSC (as programmed in their SIM card or handset). The scenarios all involve the delivery of a short message from a serving MSC to a short message service centre.
   All IMT-2000 subscribers will have the IMT-2000 SMSC as their home SMSC. All PDC subscribers will use the PDC SMSCs in their subscription network.
**MT** Mobile Terminated. In these scenarios an SMSC delivers a short message to a mobile. These scenarios all involve delivery of short messages from an SMSC to a serving VMSC. MT short messages do not necessarily originate from a mobile subscriber.

The basic inter-working requirements are:
- Any PDC SMSC in the partner networks may send short messages to a mobile served by an IMT-2000 MSC.
- Any IMT-2000 SMSC may send short messages to a mobile served by a PDC MSC in one of the partner networks.
- Any PDC MSC in the partner networks may send short messages to the IMT-2000 SMSC(s).

The scenarios are complicated by the roaming and porting possibilities:
- An IMT-2000 subscriber may be roaming in a PDC network.
- An IMT-2000 number may have ported to a PDC subscription
- A PDC number may have ported to an IMT-2000 subscription

As there is no roaming from PDC to IMT-2000, there is never a requirement for an IMT-2000 MSC to send a short message to a PDC SMSC. For the scenarios described, the following network elements and functions are identified:
**IMT-2000**

| | |
|---|---|
| HLR: | IMT-2000 HLR for both circuit switched and packet switched IMT-2000 subscribers. |
| SMSC: | Any IMT-2000 short message service centre |
| GMSC: | A gateway MSC. In all the following scenarios, it refers to a gateway MSC interfacing with a PDC network. |

**PDC**

| | |
|---|---|
| SMSC | Any PDC short message service centre |
| HLR | The HLR of a PDC subscriber. |
| GLR | Gateway Location Register - A pseudo HLR that handles subscribers roaming from other networks. Specifically an IMT-2000 subscriber, roaming in a PDC network will receive a ROaming Number (RON) from it's home HLR, which is used to query the GLR for routing instructions. |
| IW-MSC | The MSC which interworks with the PDC SMSC. |
| VMSC | The MSC serving a PDC subscriber. |
| GMSC | A gateway MSC. In all the following scenarios, it refers to a gateway MSC interfacing with the IMT-2000 network. |

In IMT-2000 networks all short message delivery is handled using 3GPP MAP operations. These are an evolution of the current GSM standards. For a mobile originated short message, the mobile station sends the message specifying the telephone number of the SMSC (usually the home SMSC). The serving MSC sends an MO_FSM (Mobile Originated Forward Short Message) MAP operation to the home SMSC, which then handles delivery. For a mobile terminated short message from an IMT-2000 SMSC, the SMSC requests routing information from the HLR about the recipient mobile. Interconnection agreements permit some operators to query HLRs in other operators' domains. If the mobile is believed to be active, the HLR responds with the identification of the serving MSC to which the short message should be sent.

In the partner PDC networks all short messages are sent in the call-user-data field of an ISDN pseudo call set-up (without any voice path being established). Short messages are distinguished from normal call set-up by a special *Calling Party's Category* value in the ISUP IAM operation. For mobile originated calls, the PDC handset sets up a pseudo call via the serving MSC to the PDC SMSC. For mobile terminated calls, the SMSC sets up a pseudo call via the IW-MSC to the PDC handset.

The SMGF is not involved in the end-to-end application procedures. It assumes that the handsets will handle any messages sent to them. The SMGF may provide the functionality to perform a filtering, or conditional passage or blocking of messages according to some configurable criteria, such as the originating subscriber or service number or number group.

IMT-2000 short messages have a maximum length of 140 octets whereas PDC short messages have a maximum length of 128 octets. In order to facilitate the deliver of short messages of length greater than 128 octets, from an IMT-2000 SMSC to a subscriber in the PDC network the short message is segmented into lengths of 128 octets or shorter and delivered as two separate short messages. These two short messages will then be re-assembled on the PDC handset.

PDC short messaging has a concatenation tele-service, which allows the segmentation and re-assembly of short messages. By using the concatenation tele-service the handset can determine whether or not it has received all segments of the short message and return an appropriate response indicating this. The SMGF may incorporate functionality which will perform the concatenation and segmentation of messages being passed between the diverse networks where necessary. This functionality, where existing in the SMGF could also be enabled or disabled conditionally by the operator of the SMGF.

Regarding data coding schemes, the PDC short message specification defines a number of Data Coding Schemes that can be used for encoding short message user data, for example ASCII, Shift, Shift JIS and PDC encoding to name a few. The data coding schemes supported by IMT-2000 for short messaging are defined in GSM 03.38. These include Default Alphabet, 8 bit encoding and Unicode. It is also possible to define a user specific data coding scheme.

If a PDC short message is sent to an IMT-2000 handset with user data encoded in a format not supported by the IMT-2000 handset then it will not be interpreted properly. Similarly an IMT-2000 short message sent to a PDC handset may contain user data encoding that is not supported by the PDC handset and again the short message will not be interpreted properly. The exact handling of such messages by the handset is a matter for the network operators to decide.

However for certain short messages it may be desirable to carry out a conversion between data coding schemes to allow a short message to be delivered to, and interpreted by, a handset successfully.

The SMGF incorporates a level of functionality to perform data coding scheme conversions, which allows messages of different data coding schemes to be passed between technologies. Additionally, the SMGF could carry out handling procedures to either accept or reject a short message depending on its destination and data coding scheme used.

It is assumed that a handset receiving a short message with a particular message class (such as Skywalker, Relay Mail, Co-Ordinator, Hotline etc) will be capable of performing the appropriate procedures and return appropriate acknowledgements. The SMGF maintains a simple table to convert between PDC message classes and tele-services into the IMT-2000 equivalents. The SMGF also comprises an advanced programmable mapping function between data coding schemes which is controlled by instructions in the form of operator commands and a configuration file.

Two-way messaging is a tele-service of PDC short messaging. It is assumed that an IMT-2000 handset, on receipt of such short messages, will be capable of performing appropriate procedures and return any replies as independent short messages.

In PDC, the reply from a two way message is contained in the REL(ease) message. The SMGF converts such replies into an independent message in the IMT-2000 domain; they will be addressed to the sender of the original message via the SMSC through which it was sent.

The following list summarises functional features of the SMGF.
◆ Support for 3GPP MAP
◆ Support for PDC ISUP
◆ IMT-2000 short message to PDC short message conversion logic
◆ PDC short message to IMT-2000 short message conversion logic
◆ Segmentation of IMT-2000 short messages
◆ Short message and call routing functionality
◆ Data Coding Scheme conversion functionality
◆ Message Class and Two-Way messaging handling functionality
◆ Support for prefix mapping table

The SMG comprises a data capture program and a database for collecting statistics and making these available for external analysis. Statistics are collected at a configurable periodic interval (e.g. 5 - 15 minutes). Statistics include:
- MAP Statistics
- ISUP Statistics
- UNIX Statistics
- TCAP Statistics
- SCCP and MTP Statistics
- Statistics on each scenario

The SMGF maintains a network transaction log for system diagnostics. The diagnostic data is captured according to parameters such as integrity of received messages and timing of bursts of excessive numbers of messages. It is possible for these logs to be restricted to just one scenario. The SMGF provides event and fault monitoring capabilities as well as a general capability to view the status of the whole system. The SMGF supplies appropriate operations and support interfaces for network management purposes to monitor the health of the platform.

The following summarises the impacts on core network elements in the IMT-2000 domains to support the short message gateway architecture. No modifications are needed to the PDC network infrastructure.

A gateway switch serving as an interconnect to a PDC network or that can be expected to process an incoming call from a PDC network, must be able to recognise the special PDC call set-up attempts used to convey short messages and divert such calls to the short message gateway. Such call attempts can be identified by the CPC(*Calling Party Category*) in the ISUP IAM operation.

Two values are specified, one for IAM's relaying PDC Mobile Originated Short Messages, and one for IAM's relaying PDC Mobile Terminated Short Messages. For PDC Mobile Originated Short Messages the CPC will indicate SME(Short Message Entity) i.e. the PDC handset and for Mobile Terminated Short Messages the CPC will indicate SMSC. The IMT-2000 Gateway MSC must be able to redirect IAM's from the PDC network containing either of these CPC settings to the SMGF.

The *Calling Party's Category* parameter code in binary is 00001001. It is a mandatory, fixed length (one byte) parameter in an ISUP IAM operation. The values used for PDC short messages are:

| | |
|---|---|
| Mobile Terminated | 11111100 (0xFC) |
| Mobile originated | 11111101 (0xFD) |

The SMGF requires that an IMT-2000 HLR, when queried for routing information, returns specific information to allow the correct routing of pseudo calls and short messages.

In an IMT-2000 network, an IMT-2000 SMSC needs to know the address of the serving VMSC of the handset in order to deliver a short message. This information is obtained by sending a SRI_SM (Send Routing Information for Short Message) enquiry to the IMT-2000 HLR. The IMT-2000 HLR will respond with a SRI_SM response which will contain the address of the serving VMSC. The IMT-2000 SMSC will then forward the short message to the VMSC address received using a FSM(Forward Short Message).

If the destination handset is located in a PDC network the short message needs to be routed to the SMGF first in order to carry out the procedures required for delivering a short message in PDC format. Therefore, in this case, the IMT-2000 HLR when queried for a SRI_SM must return the address of the SMGF as the serving VMSC address in an SRI_SM response.

Specifically, the IMT-2000 HLR in response to a SRI_SM enquiry, must return the SMGF address as the serving VMSC address in an SRI_SM response when the queried subscriber is:
- a PDC subscriber
- an IMT-2000 subscriber roaming onto a PDC network

In PDC networks short messages are delivered using pseudo calls, which carry the short message as user data. Therefore routing of short messages in PDC networks is similar to the routing of voice calls, i.e. the MSC queries the HLR or GLR, depending on the subscriber, for routing information to the serving VMSC. The HLR/GLR will return the PRN (Pursuit Routing Number) which is used to route the call to the serving VMSC.

As explained above, short messages from an IMT-2000 SMSC destined for a handset in the PDC network must first be routed to the SMGF. The SMGF must then obtain routing information from the IMT-2000 HLR to set-up a pseudo call towards the PDC network. This routing information is obtained by sending a SRI (Send Routing Information) request to the IMT-2000 HLR for a specific subscriber. The IMT-2000 HLR will respond with a SRI response indicating the MSRN(Mobile Station Roaming Number), which is a number that is used to route the call to a serving VMSC.

There are two types of subscriber which can receive short messages in the PDC network, these are PDC subscribers and IMT-2000 subscribers roaming onto the PDC network. Furthermore these subscribers could have ported numbers.

Because of number porting between the PDC and IMT-2000 networks, calls originating in the IMT-2000 network destined for either an IMT-2000 or a PDC number must first be queried towards the IMT-2000 HLR. In the case that no entry exists in the IMT-2000 HLR for the queried number the IMT-2000 HLR needs to return a response to indicate to what network, if any, the call should be routed. For this reason the IMT-2000 HLR needs to have knowledge of numbers ported into and out of the IMT-2000 network.

Specifically, the IMT-2000 HLR is required to return appropriate information for pseudo calls to PDC subscribers to indicate the PDC Subscriber Type i.e. is the PDC subscriber using a ported IMT-2000 number and if so which network is it ported. Based on this information the SMGF attaches a suitable prefix to the called subscriber number and routes the pseudo call to the IMT-2000 GMSC. The IMT-2000 GMSC will be responsible for interpreting the prefix and carrying out routing to the appropriate PDC network.

In the case of a query for an IMT-2000 subscriber roaming onto a PDC network, the IMT-2000 HLR is required to return the PDC roaming number supplied by the PDC GLR i.e. the RON(Roaming Number). The SMGF will use this RON in the Called Party Address of a pseudo call setup towards the IMT-2000 GMSC. The IMT-2000 GMSC is responsible for correctly routing the pseudo call to the correct PDC network where the PDC network will carry out the pseudo call setup to the roaming IMT-2000 subscriber.

The following table summarises the responses required by the SMGF from the IMT-2000 HLR for SRI_SM and SRI enquiries.

| ***Subscriber*** | ***Location*** | ***SRI_SM Ack*** | ***SRI Ack*** |
|---|---|---|---|
| ***IMT-2000 Sub*** | IMT-2000 Network | VMSC Address | N/A (MSRN) |
| | PDC Network | SMGF Address | RON (as supplied by PDC GLR) |
| ***PDC Sub*** | PDC Network | SMGF Address | PST (PDC Subscriber Type) |

The SMSC can categorise short messages and only deliver those that can be handled by the serving handset. Undeliverable messages do not block those that can be delivered. Thus, the SMSC discriminates between text messages, PDC ring-tone down-load messages, and other binary messages. Separate queues are maintained, such that if a message of one category is rejected, messages in other categories can still be attempted.

The following describes signalling scenarios encountered for Mobile Terminated short messages.

### 1. Short Message from IMT-2000 SMSC to an IMT-2000 subscriber in the IMT-2000 network.

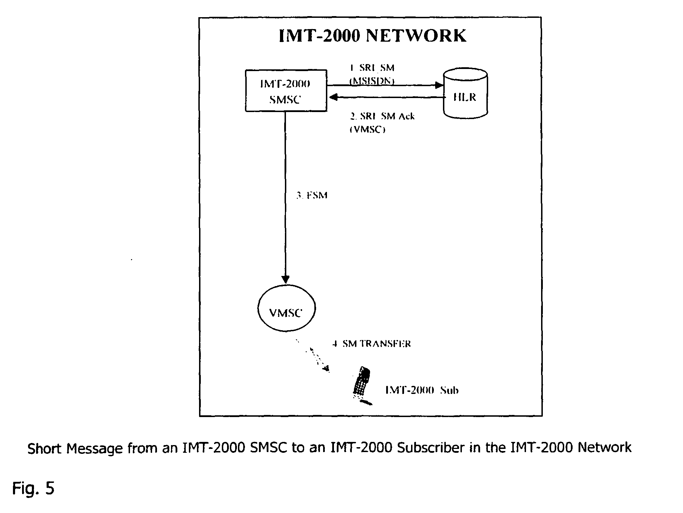

Fig. 5 illustrates the signal transfers. The signals 1 to 4 are as follows.
1. The IMT-2000 SMSC initiates a SM (Short Message) delivery by sending a SM routing enquiry to the IMT-2000 HLR. The SM routing enquiry, SRI_SM(Send Routing Info for Short Message), is routed to the appropriate IMT-2000 HLR based on the MSISDN of the destination handset.
2. The IMT-2000 HLR responds to the SRI_SM enquiry with a SRI_SM Ack which contains the address of the serving VMSC.
3. The IMT-2000 SMSC on receipt of the SRI_SM Ack containing the VMSC address will route a FSM(Forward Short Message) to the identified VMSC.
4. The VMSC carries out delivery of the SM to the IMT-2000 handset.

### 2. Short Messages from an IMT-2000 SMSC to an IMT-2000 subscriber roaming in the PDC network.

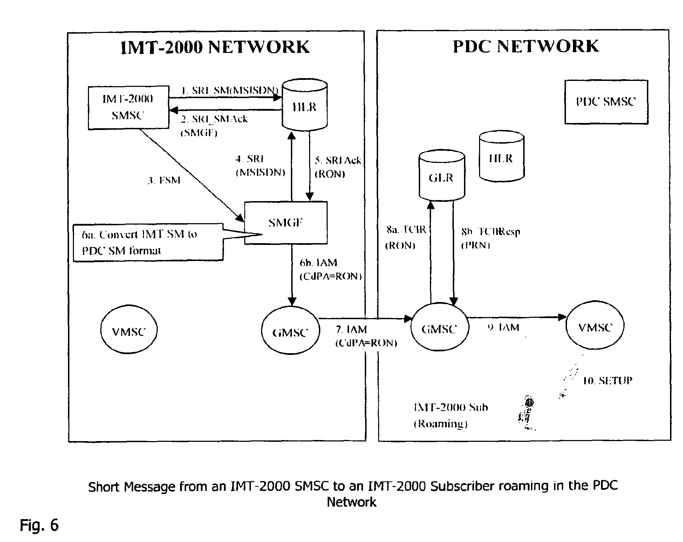

Fig. 6 illustrates the signals 1 to 10 for this scenario as follows.
1. The IMT-2000 SMSC generates a SRI_SM for a SM delivery, which is routed to the appropriate IMT-2000 HLR.
2. The IMT-2000 HLR responds to the SRI_SM enquiry with a SRI_SM Ack which contains the address of the SMGF.
   In an IMT-2000 network, when a HLR receives a SRI_SM for a specific MSISDN, one of the key pieces of information it returns to the requester is the address of the serving VMSC for the handset. A key requirement of the SMGF solution is that the IMT-2000 HLR returns the SMGF address as the serving VMSC address in a SRI_SM Ack for IMT-2000 subscribers roaming into the PDC network.
   The approach by which the IMT-2000 HLR is updated to indicate the SMGF address for IMT-2000 subscribers roaming in a PDC network is the responsibility of the roaming infrastructure implemented by the network operators. The SMGF solution is independent of this roaming infrastructure.
3. The IMT-2000 SMSC on receipt of the SRI_SM Ack containing the SMGF address will route a FSM to the SMGF indentified.
   The SMGF on receipt of a FSM issues a SRI(Send Routing Info), containing the MSISDN of the destination handset, to the appropriate IMT-2000 HLR. The SRI query is used to obtain the MSRN(Mobile Subscriber Roaming Number) of a roaming IMT-2000 subscriber.
4. The IMT-2000 HLR responds to the SRI enquiry with a SRI Ack which contains the MSRN of the roaming IMT-2000 subscriber in the PDC network. The MSRN will contain a PDC roaming number i.e. a RON(ROaming Number). A key requirement here for the SMGF solution is that the IMT-2000 HLR returns the RON in the MSRN field of a SRI Ack for an IMT-2000 subscriber roaming onto the PDC network.
   The approach by which the IMT-2000 HLR retreives the MSRN/RON for IMT-2000 subscribers roaming onto the PDC networks, will depend on the roaming infrastructure implemented by the network operators. The SMGF solution is independent of this roaming infrastructure.
5. The SMGF on receipt of a SRI Ack containing a RON, carries out an IMT-2000 SM to PDC SM format conversion. The SMGF then maps the PDC SM to a PDC ISUP IAM message. The CdPA(Called Party Address) in the IAM(Initial Address Message) is populated with the RON and routed to the IMT-2000 GMSC.
6. The IMT-2000 GMSC routes the IAM to the PDC GMSC.
7. The PDC GMSC sends a PDC MAP TCIR(Terminating Call Information Retrevial) request, containing the RON, to the appropriate GLR. The GLR responds with a TCIR response which contains routing information, i.e. the PRN(Pursuit Routing Number) to the serving VMSC in the PDC Network.
8. The PDC GMSC sends the IAM to the VMSC indentified by the PRN.
9. The VMSC initiates paging towards the IMT-2000 subscriber handset and relays the SM via a PDC SETUP message.

### 3. Short Message from IMT-2000 SMSC to a PDC subscriber in the PDC network.

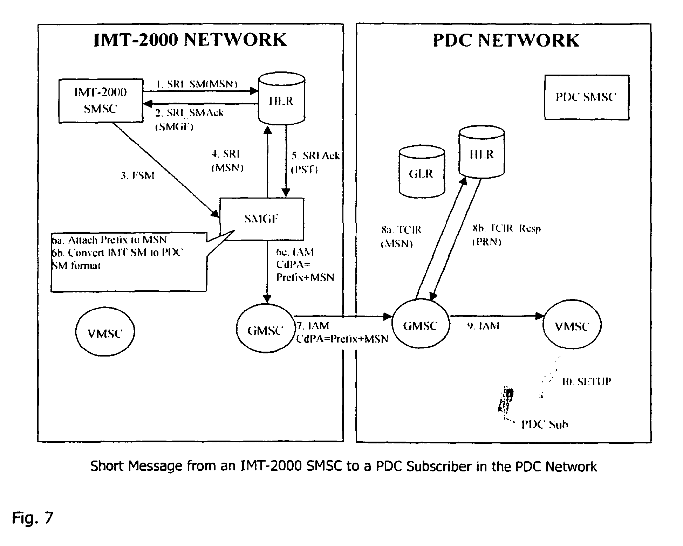

Fig. 7 illustrates the signals 1 to 10 as follows.
1. The IMT-2000 SMSC generates a SRI_SM for a SM delivery which is routed to the appropriate IMT-2000 HLR.
2. The IMT-2000 HLR examines the MSN i.e.the PDC directory number, in the SRI_SM received and identifies it as a PDC number. The IMT-2000 HLR must respond with a SRI_SM Ack identifying the SMGF as the serving MSC. A requirement of the SMGF is that the IMT-2000 HLR returns the SMGF address as the serving VMSC address in a SRI_SM Ack for PDC subscribers in the PDC network.
3. The IMT-2000 SMSC on receipt of the SRI_SM Ack containing the SMGF address routes a FSM to the SMGF indentified.
4. The SMGF, on receipt of a FSM, queries the IMT-2000 HLR for routing information to set up a pseudo call towards the PDC network. The SMGF sends a SRI query, containing the PDC subscriber number, to the IMT-2000 HLR.
5. The IMT-2000 HLR returns an SRI Ack response containing PST(PDC Subscriber Type) information indicating the type of PDC subscriber and the PDC network to which the subscriber is registered.
6. Based on the PST information received in the SRI Ack the SMGF attaches an appropriate prefix number to the subscribers directory number and uses this combination to populate the Called Party Address of an IAM message. The SMGF also carries out an IMT-2000 SM to PDC SM conversion and populates the IAM with this information. The SMGF then sends the IAM to the IMT-2000 GMSC.
7. The IMT-2000 GMSC routes the IAM to the appropriate PDC GMSC based on the attached prefix in the CdPA.
8. The PDC GMSC on receipt of an IAM sends a PDC MAP TCIR(Terminating Call Information Retrevial) request, containing the MSN, to the appropriate PDC HLR. The PDC HLR responds with a TCIR response which contains routing information, i.e. the PRN, to the serving VMSC. It is the responsibility of the PDC GMSC to intrepret correctly the supplied prefix in the CdPA of the IAM.
9. The PDC GMSC sends the IAM to the VMSC indentified by the PRN.
10. The VMSC delivers the SM to the PDC subscriber handset.

### 4. Short Message from PDC SMSC to a PDC subscriber in the PDC network.

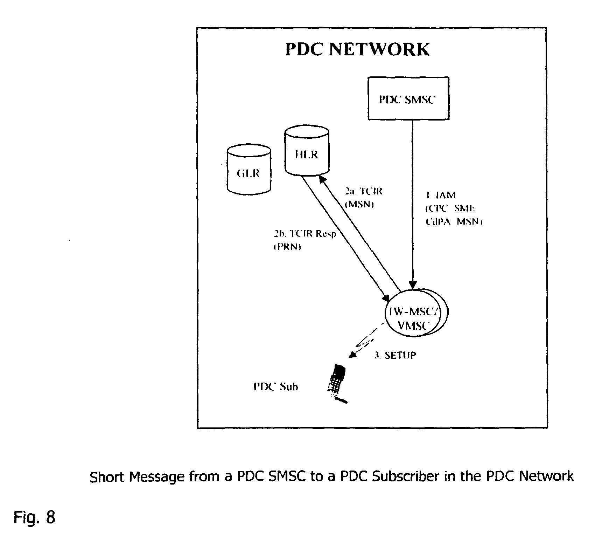

Fig. 8 illustrates signals 1 to 3 as follows.
1. The PDC SMSC routes an IAM, containing the PDC Short Message as user data, to the IW-MSC. The IW-MSC identifies that the IAM is a Short Message call from the value of the CPC(Calling Party's Category) and does not assign a real voice path.
2/3. The signalling is then the same as for any normal call set-up. The IW-MSC sends a routing enquiry message TCIR request to the HLR. The HLR returns a TCIR response which contains routing information to the serving VMSC i.e. the PRN.
   The VMSC initiates paging towards the PDC subscriber and delivers the SM via a PDC SETUP message.

### 5. Short Message from PDC SMSC to an IMT-2000 subscriber in the IMT-2000 network.

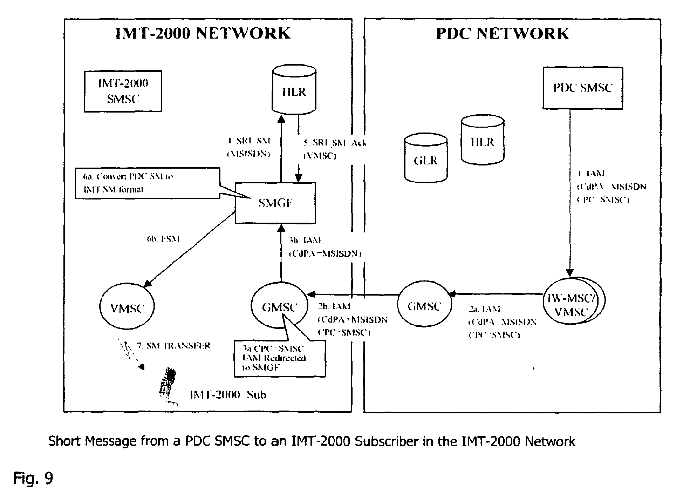

Fig. 9 illustrates the signals 1 to 7 as follows.
1. The PDC SMSC routes an IAM, containing the PDC Short Message as user data, to the IW-MSC.
2. The PDC network routes the call to the IMT-2000 GMSC. (some number portability functionality is needed in the PDC networks if the number is a PDC number ported to the IMT-2000 network).
3. The IMT-2000 GMSC redirects the IAM to the SMGF when the value of the CPC is set to SMSC indicating a Mobile Terminated Short Message IAM This is a key requirement on the IMT-2000 GMSC for the SMGF solution.
4. The SMGF on receipt of an IAM, detects from the CPC value that it is a MT Short Message call, and sends a SRI_SM populated with the MSISDN/MSN to the appropriate IMT-2000 HLR.
5. The IMT-2000 HLR responds to the SRI_SM with a SRI_SM Ack which contains the address of the serving VMSC.
6. The SMGF on receipt of a SRI_SM Ack containing the VMSC address performs a PDC SM to IMT-2000 SM conversion and sends a FSM to the serving VMSC identified.
7. The VMSC routes the SM to the IMT-2000 subscriber handset.

### 6. Short Message from PDC SMSC to an IMT-2000 subscriber roaming in the PDC network.

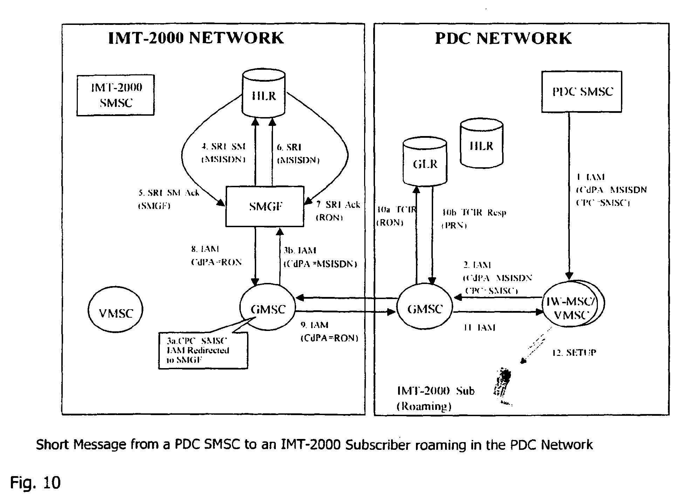

Fig. 10 illustrates signals 1 to 12 as follows.
1. The PDC SMSC routes an IAM, containing the PDC Short Message as user data, to the IW-MSC.
2. The PDC network routes the call to the IMT-2000 GMSC.
3. The IMT-2000 GMSC redirects the IAM to the SMGF when the value of the CPC is set to SMSC
4. The SMGF, on receipt of an IAM, detects from the CPC setting that it is a MT Short Message call and therefore sends a SRI_SM populated with the MSISDN/MSN, to the appropriate IMT-2000 HLR.
5. The IMT-2000 HLR responds to the SRI_SM with a SRI_SM Ack which contains the address of the SMGF as the serving VMSC. As previously stated there is a requirement for the IMT-2000 HLR to return the SMGF address in a SRI_SM Ack for IMT-2000 subscribers roaming in the PDC network.
6. The SMGF, on receipt of a SRI_SM Ack containing the SMGF address, will respond by sending a SRI message to the IMT-2000 HLR.
7. The IMT-2000 HLR returns a SRI Ack with a MSRN populated with a PDC RON.
8. In this case, the SMGF on receipt of a SRI Ack containing a RON, generates a new IAM based on the received IAM and populates the CdPA with the RON. The IAM is then redirected back to the IMT-2000 GMSC.
9. IMT-2000 GMSC routes the IAM to the PDC GMSC.
10. The PDC GMSC queries the GLR for routing information to the serving VMSC i.e. the PRN.
11. The PDC GMSC routes the IAM to the VMSC identified by the PRN.
12. The VMSC initiates paging and delivers the SM to the subscriber handset via a SETUP message.

### 7. Short Message from PDC SMSC to a subscriber with a Ported IMT-2000 number in the PDC network.

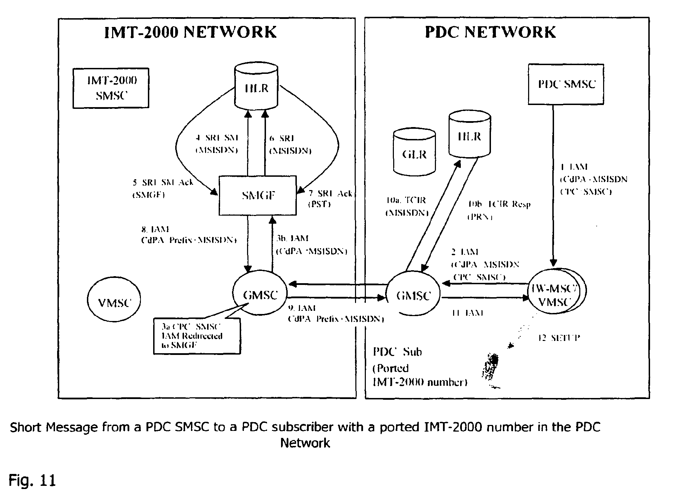

Fig. 11 illustrates signals 1 to 12 as follows.
1. The PDC SMSC routes an IAM, containing the PDC Short Message as user data, to the IW-MSC.
2. The PDC network routes the call to the IMT-2000 GMSC. In this particular case, where the source and destination PDC networks are the same, the routing of the call to the IMT-2000 network could be eliminated if the PDC IW-MSC, on receipt of the initial IAM, does a query to the PDC HLR which would return routing information for the PDC subscriber with a ported IMT-2000 MSISDN. If this were the case then this scenario would be exactly the same as delivering a SM to a PDC subscriber which has a PDC directory number.
3. The IMT-2000 GMSC redirects the IAM to the SMGF when the value of the CPC is set to SMSC.
4. The SMGF, on receipt of an IAM, detects from the CPC that the call is a MT Short Message and sends a SRI_SM with a CdPA (Called Party Address) set to the MSISDN, to the IMT-2000 HLR.
5. The IMT-2000 HLR identifies that the MSISDN number queried in the SRI_SM is a PDC subscriber with a ported IMT-2000 number and hence returns the SMGF address in the SRI_SM Ack. As previously stated this is a requirement on the IMT-2000 HLR for the SMGF solution.
6. The SMGF, on receipt of a SRI_SM Ack containing the SMGF address, responds by sending a SRI message, populated with the MSISDN, to the IMT-2000 HLR.
7. The IMT-2000 HLR returns an SRI Ack response containing PST (PDC Subscriber Type) information indicating the type of PDC subscriber and the PDC network to which the subscriber is registered.
8. Based on the PST information received in the SRI Ack the SMGF attaches an appropriate prefix number to the subscribers directory number and use this combination to populate the Called Party Address of an IAM message. The SMGF also carries out an IMT-2000 SM to PDC SM conversion and populates the IAM with this information. The SMGF then sends the IAM back to the IMT-2000 GMSC.
9. The IMT-2000 GMSC routes the IAM to the PDC GMSC based on the prefix of the CdPA.
10. The PDC GMSC, on receipt of the IAM,queries the appropriate PDC HLR for routing information to the serving VMSC. This returns the PRN. It is the responsibility of the PDC GMSC to intrepret the prefix in th CdPA appropriately.
11. The PDC GMSC routes the IAM to the VMSC identified by the PRN.
12. The VMSC initiates paging and delivers the SM to the subscriber handset via a SETUP message.

### 8. Short Message from IMT-2000 subscriber in the IMT-2000 network to its home IMT-2000 SMSC.

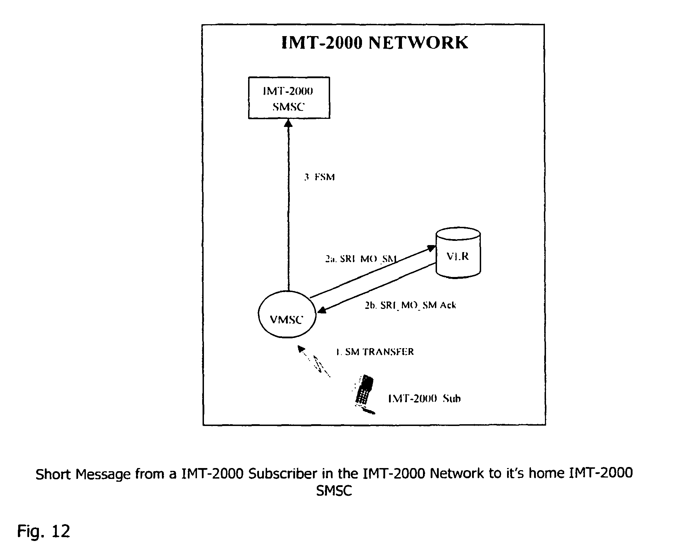

Fig. 12 illustrates signals 1 to 3 as follows.
1. An IMT-2000 subscriber initiates delivery of a short message. The short message transferred to the serving VMSC contains the Service Centre address of the home IMT-2000 SMSC.
2. The serving VMSC sends a SRI_MO_SM (Send Routing Info for MO SM) to the VLR to check the subscriber related information. The VLR returns a SRI_MO_SM Ack confirming the subscriber information.
3. The VMSC on receipt of a positive SRI_MO_SM Ack, sends a FSM to the home IMT-2000 SMSC identified by the Service Centre address received from the mobile station.

### 9. Short Message from IMT-2000 subscriber roaming in a PDC network to its Home IMT-2000 SMSC.

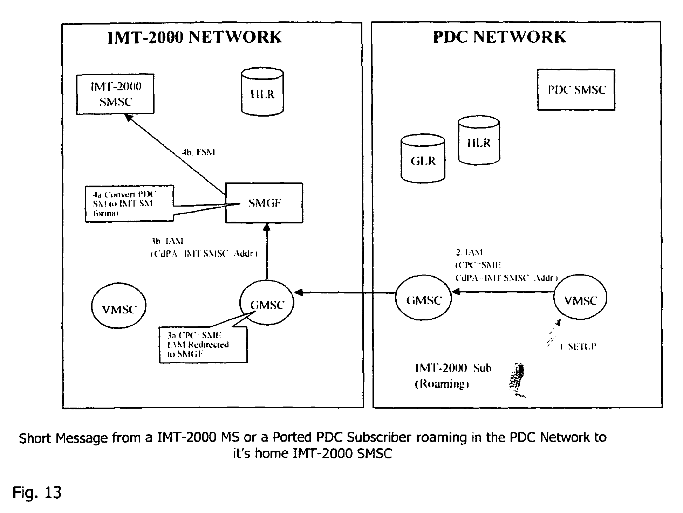

Fig. 13 illustrates signals 1 to 4 as follows.
1. An IMT-2000 subscriber roaming in the PDC network, initiates a short message delivery. A SETUP message, which contains the home IMT-2000 SMSC Service Centre address, is sent to the serving VMSC.
2. The VMSC routes an IAM message, which has it's CdPA set to the IMT-2000 SMSC address, to the IMT-2000 GMSC.
3. The IMT-2000 GMSC reroutes the IAM to the SMGF based on the CPC indicating SME i.e.a Mobile Originated Short Message IAM call. This is a key requirement of the IMT-2000 GMSC for the SMGF solution.
4. The SMGF, on receipt of an IAM, detects from the CPC setting that this is a Mobile Originated Short Message call and therefore carries out a conversion of the PDC SM to a IMT-2000 SM format. The IMT-2000 SM is then forwarded in a FSM to the IMT-2000 SMSC.

### 10. Short Message from PDC subscriber in the PDC network to its Home PDC SMSC.

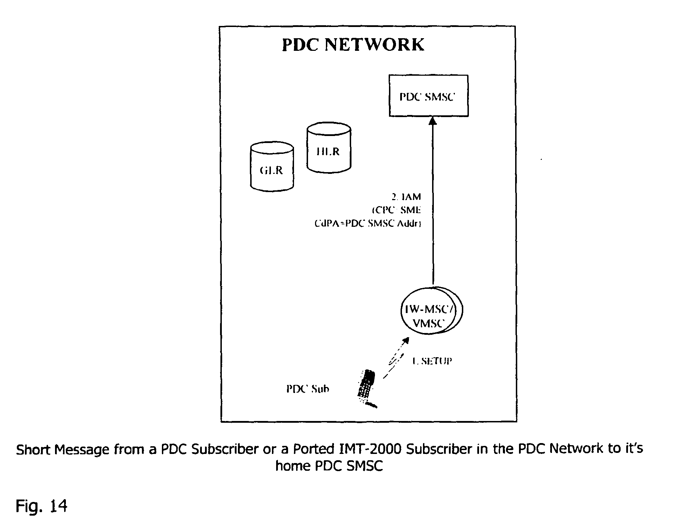

Fig. 14 illustrates signals 1 and 2 as follows.
1. An PDC subscriber initiates a short message delivery. A call SETUP message, which contains the home PDC SMSC address, is sent to the serving VMSC.
2. The VMSC routes an IAM to the home PDC SMSC..

It will be appreciated that the invention provides for comprehensive and versatile SM communication across different networks. This is achieved without modification of one of the networks.

The invention is not limited to the embodiments described but may be varied in construction and detail.

## Claims

1. A short message gateway comprising a gateway function (SMGF) comprising means for inter-working with entities of non-compatible home and foreign mobile networks using different protocols and for performing short message format conversion between said protocols of said home and foreign networks and for routing converted messages, wherein,
the gateway function comprises means for communicating with a HLR and an SMSC of the home network and for communicating with the foreign network via a gateway mobile switching centre (G-MSC) in the home network,
the gateway further comprises means in a Home Location Register (HLR) of the home network for returning, in response to a routing query from a home network SMSC for a short message delivery attempt, an address for the gateway function as a serving VMSC, and the gateway function comprises means for receiving from the home network SMSC a short message and for performing protocol conversion of said short message; and
the gateway comprising means in the G-MSC for receiving short messages from the foreign network and for redirecting them to the gateway function and the gateway function comprises means for receiving said short messages from the G-MSC and for performing protocol conversion of said messages.

2. A short message gateway as claimed in claim 1, wherein the gateway function comprises means for inter-working between a plurality of networks using similar protocols on one side and a network using a different protocol on the other side.

3. A short message gateway as claimed in claims 1 or 2, wherein the gateway comprises means in the HLR for providing to the gateway function an MSRN of a roaming subscriber in a the foreign network.

4. A short message gateway as claimed in claim 3, wherein the gateway comprises means in the HLR for providing the gateway function with routing data for a pseudo call towards a PDC foreign network, said call being for sending a short message in a call-user data field of an ISDN pseudo call set-up; and wherein the gateway comprises means in the G-MSC for recognizing a PDC call set-up attempt used to convey short messages and for routing the message on to the gateway function.

5. A short message gateway as claimed in any preceding claim, wherein the gateway function further comprises means for capturing short message statistical data at configurable intervals.

6. A short message gateway as claimed in any preceding claims, wherein the gateway function comprises means for maintaining a table of corresponding message classes and tele-services, and for using said table for message class and tele-services conversion.

7. A short message gateway as claimed in any preceding claim, wherein the gateway function comprises a programmable mapping function between data coding schemes, said mapping function being controlled by instructions in the form of operator commands and a configuration file.

8. A short message gateway as claimed in any preceding claim, wherein the gateway function comprises means for segmentation of messages if a network has a shorter maximum message length than another network.

9. A short message gateway as claimed in any preceding claim, wherein the gateway function comprises means for maintaining a network transaction log of diagnostic data.

10. A short message gateway as claimed in any preceding claim, wherein the gateway function comprises means for, in response to receiving a short message contained in an IAM which originated in a foreign PDC network:
sending an SRI_SM populated with an MSISDN or an MSN to a home network HLR,
receiving from the home network GLR an SRI_SM_Ack response containing an address of the gateway function as the serving VMSC,
sending, in response, an SRI message to the home network HLR,
receiving from the HLR an SRI Ack with an MSRN populated with a PDC RON,
generating a new IAM based on the received IAM and populating a CdPA with the RON, and
re-directing the IAM to the home network G-MSC.

11. A short message gateway as claimed in any preceding claim, wherein the gateway function comprises means for, in response to receiving a short message contained in an IAM which originated in a foreign PDC network:
sending to the home network HLR an SRI_SM with a CdPA set to a destination MSISDN,
receiving from the home network HLR an SRI_SM Ack with the address of the gateway function,
responding to the home network HLR by sending an SRI message populated with the MSISDN,
receiving from the home network HLR an SRI Ack response containing PDC subscriber type information indicating the type of PDC subscriber and the PDC network to which the subscriber is registered,
based on the PDC subscriber type information, attaching a prefix number to the subscriber's directory number and using this combination to populate the Called Party Address of the IAM, performing short message conversion and populating the IAM with the converted message, and
sending the IAM to the home network G-MSC for onward routing to the foreign network.

12. A short message gateway as claimed in any preceding claim, wherein the gateway function comprises means for performing filtering or conditional passage or blocking of messages according to configurable criteria.

13. A short message gateway as claimed in claim 12, wherein the criteria are originating subscriber or service number or number group.

14. A short message gateway as claimed in any preceding claim, wherein the gateway function comprises means for carrying out handling procedures to either accept or reject a short message depending on its destination and data coding scheme used.

15. A short message gateway as claimed in any preceding claim, wherein the gateway function comprises means for converting into an independent message in the home network a PDC reply from a two-way message contained in a REL(ease) message, the PDC network being the foreign network.

16. A short message gateway as claimed in any of claims 7 to 15, wherein the gateway function comprises means for carrying out a conversion between data coding schemes to allow a short message to be successfully delivered to, and interpreted by, a mobile device.

17. A short message gateway as claimed in any preceding claim, wherein the gateway function comprises means for, in response to receiving a mobile originated short message from a home network subscriber roaming in the foreign network or a ported foreign network subscriber roaming in the foreign network:
performing protocol conversion of said short message and forwarding it to the home network SMSC.

## Patentansprüche

1. Kurznachrichten-Gateway mit einer Gateway-Funktion (SMGF), die Mittel zum Zusammenarbeiten mit Entitäten von nichtkompatiblen mobilen Heimat- und Fremdnetzen, die unterschiedliche Protokolle benutzen, und zum Ausführen einer Kurznachrichtenformatkonversion zwischen den genannten Protokollen der genannten Heimat- und Fremdnetze und zum Leiten von konvertierten Meldungen umfasst, wobei
die Gateway-Funktion Mittel zum Kommunizieren mit einem HLR und einer SMSC des Heimatnetzes und zum Kommunizieren mit dem Fremdnetz über eine mobile Gateway-Vermittlungszentrale (G-MSC) in dem Heimatnetz umfasst,
wobei das Gateway ferner Mittel in einem Heimatortsregister (HLR) des Heimatnetzes umfasst, um als Reaktion auf eine Routing-Anfrage von einer Heimatnetz-SMSC für einen Kurznachrichtenlieferversuch eine Adresse für die Gateway-Funktion als Server-VMSC zurückzugeben, und die Gateway-Funktion Mittel zum Empfangen einer Kurznachricht von der Heimatnetz-SMSC und zum Ausführen einer Protokollkonversion der genannten Kurznachricht umfasst; und
wobei das Gateway Mittel in der G-MSC zum Empfangen von Kurznachrichten von dem Fremdnetz und zum Umleiten derselben zur Gateway-Funktion umfasst und die Gateway-Funktion Mittel zum Empfangen der genannten Kurznachrichten von der G-MSC und zum Ausführen einer Protokollkonversion der genannten Nachrichten umfasst.

2. Kurznachrichten-Gateway nach Anspruch 1, wobei die Gateway-Funktion Mittel für die Zusammenarbeit zwischen mehreren ähnliche Protokolle benutzenden Netzwerken auf einer Seite und einem ein anderes Protokoll benutzenden Netzwerk auf der anderen Seite umfasst.

3. Kurznachrichten-Gateway nach Anspruch 1 oder 2, wobei das Gateway Mittel im HLR umfasst, um der Gateway-Funktion eine MSRN eines Roaming-Teilnehmers in dem Fremdnetz bereitzustellen.

4. Kurznachrichten-Gateway nach Anspruch 3, wobei das Gateway Mittel im HLR umfasst, um der Gateway-Funktion Routing-Daten für einen Pseudoruf zu einem PDC-Fremdnetz bereitzustellen, wobei der genannte Ruf zum Senden einer Kurznachricht in einem Rufbenutzerdatenfeld eines ISDN-Pseudo-Ruf-Setups dient; und wobei das Gateway Mittel in der G-MSC umfasst, um den Versuch des Einrichtens eines PDC-Rufs zu erkennen, um Kurznachrichten zu übertragen und die Nachricht zur Gateway-Funktion weiterzuleiten.

5. Kurznachrichten-Gateway nach einem der vorherigen Ansprüche, wobei die Gateway-Funktion ferner Mittel zum Erfassen von statistischen Kurznachrichtendaten in konfigurierbaren Intervallen umfasst.

6. Kurznachrichten-Gateway nach einem der vorherigen Ansprüche, wobei die Gateway-Funktion Mittel zum Führen einer Tabelle von entsprechenden Nachrichtenklassen und Telediensten und zum Benutzen der genannten Tabelle für Nachrichtenklassen- und Teledienstkonversionen umfasst.

7. Kurznachrichten-Gateway nach einem der vorherigen Ansprüche, wobei die Gateway-Funktion eine programmierbare Abbildungsfunktion zwischen Datencodierschemata umfasst, wobei die genannte Abbildungsfunktion durch Befehle in Form von Operator-Befehlen und einer Konfigurationsdatei gesteuert wird.

8. Kurznachrichten-Gateway nach einem der vorherigen Ansprüche, wobei die Gateway-Funktion Mittel zum Segmentieren von Nachrichten umfasst, wenn die maximale Nachrichtenlänge eines Netzwerks kürzer ist als die eines anderen Netzwerks.

9. Kurznachrichten-Gateway nach einem der vorherigen Ansprüche, wobei die Gateway-Funktion Mittel zum Führen eines Netzwerktransaktionsprotokolls von Diagnostikdaten umfasst.

10. Kurznachrichten-Gateway nach einem der vorherigen Ansprüche, wobei die Gateway-Funktion Mittel umfasst, um in Reaktion auf den Empfang einer in einer IAM enthaltenen Kurznachricht mit Ursprung in einem fremden PDC-Netz Folgendes zu tun:
Senden einer mit einer MSISDN oder einer MSN populierten SRI_SM zu einem Heimatnetz-HLR,
Empfangen einer SRI_SM_Ack-Antwort vom Heimatnetz-HLR, die eine Adresse der Gateway-Funktion als Server-VMSC enthält,
Senden, als Reaktion, einer SRI-Nachricht zum Heimatnetz-HLR,
Empfangen einer SRI-Quittung vom HLR mit einer MSRN, die mit einer PDC RON populiert ist,
Erzeugen einer neuen IAM auf der Basis der empfangenen IAM und Populieren einer CdPA mit der RON, und
Umleiten der IAM zur Heimatnetz-G-MSC.

11. Kurznachrichten-Gateway nach einem der vorherigen Ansprüche, wobei die Gateway-Funktion Mittel umfasst, um in Reaktion auf den Empfang einer in einer IAM enthaltenen Kurznachricht mit Ursprung in einem fremden PDC-Netz Folgendes zu tun:
Senden einer SRI_SM zum Heimatnetz-HLR mit einer auf eine Ziel-MSISDN gesetzten CdPA,
Empfangen einer SRI_SM-Quittung vom Heimatnetz-HLR mit der Adresse der Gateway-Funktion,
Antworten auf das Heimatnetz-HLR durch Senden einer mit der MSISDN populierten SRI-Nachricht,
Empfangen einer SRI-Ack-Antwort vom Heimatnetz-HLR, die Informationen über den PDC-Teilnehmertyp enthält, die den PDC-Teilnehmertyp und das PDC-Netz anzeigt, wo der Teilnehmer registriert ist,
Anhängen, auf der Basis der PCD-Teilnehmertypinformationen, einer Präfix-Nummer an die Verzeichnisnummer des Teilnehmers und Benutzen dieser Kombination zum Populieren der Zielrufnummer der IAM, Durchführen einer Kurznachrichtenkonversion und Populieren der IAM mit der konvertierten Nachricht, und
Senden der IAM zur Heimatnetz-G-MSC zur Weiterleitung zum Fremdnetz.

12. Kurznachrichten-Gateway nach einem der vorherigen Ansprüche, wobei die Gateway-Funktion Mittel zum Ausführen von Filterung oder konditionellem Durchlassen oder Blockieren von Nachrichten gemäß konfigurierbaren Kriterien umfasst.

13. Kurznachrichten-Gateway nach Anspruch 12, wobei die Kriterien ursprüngliche Teilnehmer- oder Service-Nummer oder Nummerngruppe sind.

14. Kurznachrichten-Gateway nach einem der vorherigen Ansprüche, wobei die Gateway-Funktion Mittel zum Durchführen von Handhabungsprozeduren umfasst, um eine Kurznachricht je nach ihrem Ziel und dem benutzten Datencodierschema zu akzeptieren oder zurückzuweisen.

15. Kurznachrichten-Gateway nach einem der vorherigen Ansprüche, wobei die Gateway-Funktion Mittel zum Konvertieren einer PDC-Erwiderung von einer in einer REL(ease)-Nachricht enthaltenen Zweiwegnachricht in eine unabhängige Nachricht in dem Heimatnetz, wobei das PDC-Netz das Fremdnetz ist.

16. Kurznachrichten-Gateway nach einem der Ansprüche 7 bis 15, wobei die Gateway-Funktion Mittel zum Durchführen einer Konversion zwischen Datencodierschemata beinhaltet, um es zuzulassen, dass eine Kurznachricht erfolgreich zu einem mobilen Gerät geliefert und von diesem interpretiert wird.

17. Kurznachrichten-Gateway nach einem der vorherigen Ansprüche, wobei die Gateway-Funktion Mittel umfasst, um in Reaktion auf den Empfang einer von einem Mobilgerät stammenden Kurznachricht von einem Heimatnetzteilnehmer, der in dem Fremdnetz roamt, oder einem portierten Fremdnetzteilnehmer, der in dem Fremdnetz roamt, Folgendes zu tun:
Ausführen einer Protokollkonversion der genannten Kurznachricht und Weiterleiten derselben zur Heimatnetz-SMSC.

## Revendications

1. Une passerelle de messages courts comprenant une fonction de passerelle (SMGF) comprenant un moyen d'inter-fonctionnement avec des entités de réseaux mobiles domestiques et étrangers non compatibles utilisant des protocoles différents et d'exécution d'une conversion de format de message court entre lesdits protocoles desdits réseaux domestiques et étrangers et d'acheminement des messages convertis, où
la fonction de passerelle comprend un moyen de communiquer avec un HLR et un SMSC du réseau domestique et de communiquer avec le réseau étranger via un centre de commutation mobile passerelle (G-MSC) dans le réseau domestique,
la passerelle comprend en outre un moyen dans un registre de position de rattachement (HLR) du réseau domestique de renvoyer, en réponse à une demande d'acheminement provenant d'un SMSC de réseau domestique pour une tentative de remise de message court, une adresse pour la fonction de passerelle en tant que VMSC de desserte et la fonction de passerelle comprend un moyen de recevoir du SMSC de réseau domestique un message court et d'exécuter une conversion de protocole dudit message court, et
la passerelle comprend un moyen dans le G-MSC de recevoir des messages courts du réseau étranger et de les rediriger vers la fonction de passerelle et la fonction de passerelle comprend un moyen de recevoir lesdits messages courts du G-MSC et d'exécuter une conversion de protocole desdits messages.

2. Une passerelle de messages courts selon la Revendication 1, où la fonction de passerelle comprend un moyen d'inter-fonctionnement entre une pluralité de réseaux utilisant des protocoles similaires d'une part et un réseau utilisant un protocole différent d'autre part.

3. Une passerelle de messages courts selon la Revendication 1 ou 2, où la passerelle comprend un moyen dans le HLR de fournir à la fonction de passerelle un MSRN d'un abonné itinérant dans le réseau étranger.

4. Une passerelle de messages courts selon la Revendication 3, où la passerelle comprend un moyen dans le HLR de fournir à la fonction de passerelle des données d'acheminement pour un pseudo appel vers un réseau étranger PDC, ledit appel étant destiné à envoyer un message court dans un champ de données utilisateur-appel d'un établissement de pseudo appel RNIS, et où la passerelle comprend un moyen dans le G-MSC de reconnaître une tentative d'établissement d'appel PDC utilisée pour transmettre des messages courts et pour acheminer le message vers la fonction de passerelle.

5. Une passerelle de messages courts selon l'une quelconque des Revendications précédentes, où la fonction de passerelle comprend en outre un moyen de capturer des données statistiques de messages courts à des intervalles configurables.

6. Une passerelle de messages courts selon l'une quelconque des Revendications précédentes, où la fonction de passerelle comprend un moyen d'entretenir une table de classes de messages et de téléservices correspondants et d'utiliser ladite table pour une conversion de classes de messages et de téléservices.

7. Une passerelle de messages courts selon l'une quelconque des Revendications précédentes, où la fonction de passerelle comprend une fonction de mise en correspondance programmable entre des schémas de codage de données, ladite fonction de mise en correspondance étant commandée par des instructions sous la forme de commandes d'opérateur et un fichier de configuration.

8. Une passerelle de messages courts selon l'une quelconque des Revendications précédentes, où la fonction de passerelle comprend un moyen de segmentation de messages si un réseau possède une longueur de message maximale plus courte qu'un autre réseau.

9. Une passerelle de messages courts selon l'une quelconque des Revendications précédentes, où la fonction de passerelle comprend un moyen d'entretenir un journal de transaction de réseau de données de diagnostic.

10. Une passerelle de messages courts selon l'une quelconque des Revendications précédentes, où la fonction de passerelle comprend un moyen, en réponse à la réception d'un message court contenu dans un message IAM dont l'origine se trouve dans un réseau PDC étranger :
d'envoyer un SRI_SM garni avec un MSISDN ou un MSN vers un HLR de réseau domestique,
de recevoir du HLR de réseau domestique une réponse SRI_SM_Ack contenant une adresse de la fonction de passerelle en tant que VMSC de desserte,
d'envoyer, en réponse, un message SRI au HLR de réseau domestique,
de recevoir du HLR un SRI Ack avec un MSRN garni avec un PDC RON,
de générer un nouveau message IAM basé sur le message IAM reçu et de garnir un CdPA avec le RON, et
de rediriger le message IAM vers le G-MSC de réseau domestique.

11. Une passerelle de messages courts selon l'une quelconque des Revendications précédentes, où la fonction de passerelle comprend un moyen, en réponse à la réception d'un message court contenu dans un message IAM dont l'origine se trouve dans un réseau PDC étranger :
d'envoyer au HLR de réseau domestique un SRI_SM avec un CdPA réglé sur un MSISDN de destination,
de recevoir du HLR de réseau domestique un SRI_SM Ack avec l'adresse de la fonction de passerelle,
de répondre au HLR de réseau domestique en envoyant un message SRI garni avec le MSISDN.
de recevoir du HLR de réseau domestique une réponse SRI Ack contenant des informations de type d'abonné PDC indiquant le type de l'abonné PDC et le réseau PDC dans lequel l'abonné est enregistré,
en fonction des informations de type d'abonné PDC, d'attacher un numéro de préfixe au numéro d'annuaire de l'abonné et d'utiliser cette combinaison pour garnir l'adresse de correspondant appelé du message IAM, d'exécuter une conversion de message court et de garnir le message IAM avec le message converti, et
d'envoyer le message IAM au G-MSC de réseau domestique pour un acheminement vers l'avant vers le réseau étranger.

12. Une passerelle de messages courts selon l'une quelconque des Revendications précédentes, où la fonction de passerelle comprend un moyen d'exécuter un filtrage, une transmission conditionnelle ou un blocage de messages selon des critères configurables.

13. Une passerelle de messages courts selon la Revendication 12, où les critères sont abonné d'origine, numéro de service ou groupe de numéros.

14. Une passerelle de messages courts selon l'une quelconque des Revendications précédentes, où la fonction de passerelle comprend un moyen d'exécuter des procédures de manipulation pour soit accepter ou rejeter un message court en fonction de sa destination et du schéma de codage de données utilisé.

15. Une passerelle de messages courts selon l'une quelconque des Revendications précédentes, où la fonction de passerelle comprend un moyen de convertir en un message indépendant dans le réseau domestique une réponse PDC provenant d'un message bidirectionnel contenu dans un message de libération REL(ease), le réseau PDC étant le réseau étranger.

16. Une passerelle de messages courts selon l'une quelconque des Revendications 7 à 15, où la fonction de passerelle comprend un moyen d'effectuer une conversion entre des schémas de codage de données de façon à permettre à un message court d'être remis avec succès à, et d'être interprété par, un dispositif mobile.

17. Une passerelle de messages courts selon l'une quelconque des Revendications précédentes, où la fonction de passerelle comprend un moyen, en réponse à la réception d'un message court ayant pour origine un dispositif mobile et provenant d'un abonné d'un réseau domestique en itinérance dans le réseau étranger ou d'un abonné d'un réseau étranger porté en itinérance dans le réseau étranger :
d'exécuter une conversion de protocole dudit message court et de le transmettre vers le SMSC de réseau domestique.
